# EUROPÄISCHE PATENTSCHRIFT

(11) **EP 1 315 466 B1**
(45) Veröffentlichungstag und Bekanntmachung des Hinweises auf die Patenterteilung: **04.04.2007**
(21) Anmeldenummer: 01965182.7
(22) Anmeldetag: 08.08.2001
(51) Int. Cl.: A61C 17/34, A46B 7/08, A46B 9/04

(54) **MOTORISCH ANGETRIEBENE ZAHNBÜRSTE UND BÜRSTENKOPF HIERFÜR**
MOTOR-DRIVEN TOOTHBRUSH AND BRUSH HEAD FOR THE SAME
BROSSE A DENTS ELECTRIQUE ET TETE DE BROSSE CORRESPONDANTE

(30) Priorität: 06.09.2000 DE 10044031
(43) Veröffentlichungstag der Anmeldung: 04.06.2003
(73) Patentinhaber: Braun GmbH, 61476 Kronberg (DE)
(72) Erfinder: BOLAND, Bernhard, 60385 Frankfurt (DE); DRIESEN, Georges, 61476 Weilrod (DE); DRÖSSLER, Michael, 30989 Gehrden (DE); SCHAEFER, Norbert, 60322 Frankfurt (DE)
(86) Internationale Anmeldenummer: PCT/EP2001/009157
(87) Internationale Veröffentlichungsnummer: WO 2002/019942

(56) Entgegenhaltungen:
- WO-A-97/41753
- DE-U- 29 705 182
- US-A- 2 306 264
- US-A- 5 467 495

## Beschreibung

Die vorliegende Erfindung betrifft eine Zahnbürste mit einem motorischen Antrieb zur rotatorischen, translatorischen oder sonstigen Bewegung eines Bürstenkopfs. Die Erfindung betrifft ferner einen Bürstenkopf für eine solche Zahnbürste mit einer Vielzahl von Borsten und einem Borstenträger, an dem die Borsten befestigt sind, wobei der Borstenträger im wesentlichen tellerförmig ausgebildet ist, eine Bewegungs- oder Rotationsachse, um die er antreibbar ist, aufweist und Verbindungsmittel zur Ankopplung an den Antrieb der Zahnbürste besitzt.

Bei einfachen Handzahnbürsten ohne motorischen Antrieb ist es bekannt, nicht nur den Bürstenstiel, sondern auch den Bürstenkopf selbst mit den daran befestigten Borsten flexibel auszubilden, um eine bessere Anpassung der von den Borsten definierten Arbeitsfläche an die Zahnkonturen zu erreichen. Der Bürstenkopf ist in mehrere Segmente unterteilt (vgl. US 2306264, DE 297 05 182 U1, WO 97/41753), die durch gummielastische Querstege miteinander verbunden sind, so daß sich die Segmente zueinander verwinden können (vgl. zum Beispiel DE 198 31 412 A1, WO 98/27846, WO 96/02165). Die Verwindbarkeit des Bürstenkopfes erlaubt es, daß sich die im Ausgangszustand konkave Arbeitsfläche, die von den freien Enden der Borsten definiert wird, bei Druck an die Zähne in eine im wesentlichen ebene Arbeitsfläche verwandelt.

Bei gattungsgemäßen Bürstenköpfen für motorisch angetriebene Zahnbürsten herrschen jedoch starre Borstenträger in Form einer Scheibe vor, an denen die Borstenbüschel starr befestigt sind. Im Gegensatz zu Handzahnbürsten führen derartige Bürstenköpfe eine Rotationsbewegung, sei es kontinuierlich oder oszillatorisch, um eine zur Borstenträgerscheibe im wesentlichen senkrechte Rotationsachse aus. Zur verbesserten Anpassung der Arbeitsfläche an die Zahnkontur und zur Verbesserung der Interdentalreinigung wurde bei Bürstenköpfen motorisch angetriebener Zahnbürsten ein anderer Weg eingeschlagen. So wurden zum Beispiel schräg gegen die Rotationsrichtung angestellte Borstenbüschel vorgeschlagen, die in die Zahnzwischenräume eindringen sollten (vgl zum Beispiel EP 0765642). Es wurden auch drehbare Bürstenanordnungen mit parallel zur Rotationsachse ausgerichteten Borstenbündeln vorgeschlagen, deren Borsten durch geeignete Längenabmessung eine insgesamt etwa kegelförmige Arbeitsfläche bilden, die die Reinigung von Zahnzwischenräumen erleichtern soll (vgl US 5,862,559).

Es wurde auch bereits vorgeschlagen, die Borstenbüschel relativ zueinander anzutreiben. Die US 5,500,970 zeigt einen gattungsfremden Bürstenkopf für eine Zahnbürste, der v-förmig angeordnete Arme mit daran befestigten Borstenbüscheln zeigt. Die aufeinander zu gerichteten Borstenbüschel nehmen die Zähne zangenartig zwischen sich auf. Die Arme werden von einem entsprechenden Antrieb aufeinander zu und voneinander weg bewegt, so daß die Borstenbüschel an den zwischen ihnen liegenden Zahnflanken entsprechende Putzbewegungen ausführen. Die zangenartige Anordnung der Borstenbüschel verhindert jedoch eine rotatorische Antriebsbewegung der Borsten. Dementsprechend ist bei dieser bekannten Zahnbürste die Reinigung der Kauflächen der Zähne unbefriedigend.

Gattungsgemäße Bürstenköpfe für motorisch angetrieben Zahnbürsten mit einer rotatorischen Antriebsbewegung haben daher nach wie vor Verbesserungsbedarf in der Aproximal- und Interdentalreinigung. Insbesondere die umfassende Reinigung aller Zahnbereiche einschließlich der Molaren, Prämolaren und Schneidezähne ist verbesserungsfähig.

Der vorliegenden Erfindung liegt daher die Aufgabe zugrunde, eine verbesserte Zahnbürste der eingangs genannten Art sowie einen verbesserten Bürstenkopf hierfür zu schaffen, die Nachteile des Standes der Technik vermeiden und letzteren in vorteilhafter Weise weiterbilden. Insbesondere soll ein Bürstenkopf für motorisch angetriebene Zahnbürsten mit rotatorischer Antriebsbewegung dahingehend verbessert werden, daß eine gründliche Aproximal- und Interdentalreinigung erreicht wird.

Erfindungsgemäß schlägt die vorliegende Erfindung zur Lösung dieser Aufgabe einen Bürstenkopf nach Patentanspruch 1 sowie eine Zahnbürste nach Patentanspruch 17 vor.

Der Bürstenkopf besitzt also einen in mehrere Segmente unterteilten Borstenträger, die relativ zueinander beweglich angeordnet sind. Im Gegensatz zu den bislang starren Borstenträgerscheiben kann hiermit eine bessere Anpassung der von den freien Borstenenden definierten Arbeitsfläche an die Zahnkontur und eine bessere Reinigung aller Zahnbereiche, insbesondere im Aproximal- und Interdentalbereich erreicht werden. Zumindest ein Borstenträgersegment besitzt neben der Rotationsachse für den gesamten Borstenträger eine weitere Bewegungsachse, das heißt, zumindest ein Borstenträgersegment ist mittels eines Lagerabschnitts auf einem Achsschaft gelagert, der an einer Borstenträgerbasis befestigt ist, und daher relativ zur Borstenträgerbasis beweglich. Die Borstenträgerbasis ist an den Antrieb einer Zahnbürste kuppelbar.

Insbesondere besitzt der Borstenträger mehrere Borstenträgersegmente, die relativ zueinander um zumindest eine Schwenkachse schwenkbar sind. Die Borstenträgersegmente sind also gemeinsam um die Rotationsachse des Bürstenkopfes drehbar. Zusätzlich sind sie relativ zueinander schwenkbar. Die entsprechende Schwenkachse verläuft vorzugsweise quer zur Bewegungs- oder Rotationsachse des Bürstenkopfes, bevorzugt senkrecht zur Richtung der Rotationsachse.

In Weiterbildung der Erfindung sind Vorspannmittel, insbesondere eine Federeinrichtung zur Vorspannung der Borstenträgersegmente relativ zueinander in eine Grundstellung vorgesehen. Die beweglichen Borstenträgersegmente bzw. die daran befestigten Borsten folgen selbständig und kraftabhängig der Gebißkontur. Hierdurch wird eine verbesserte Reinigung erzielt. Zum anderen können die Borsten entgegen der Vorspannkraft zurückweichen, um bei nicht angepaßter Andruckkraft Verletzungen insbesondere der Gingiva zu vermeiden. Zudem erhalten die freien Borstenenden beim Wegkippen des jeweiligen Borstenträgersegments eine Bewegungskomponente quer zur Rotationsrichtung, wodurch die äußeren Filamente Zahnzwischenräume stärker erreichen und putzen können.

In vorteilhafter Weise ist keine Zwangsbewegung der Borstenträgersegmente relativ zueinander vorgesehen. Die beweglichen Borstenträgersegmente können sich frei bzw. entgegen der Vorspannung zueinander bewegen, um sich besser der Gebißkontur anpassen zu können. Dies ist die Umkehr dessen, was die US 5,500,970 vorschlägt. Während dieser Stand der Technik eine freie Ausgleichsbewegung des gesamten Bürstenkopfes um seine Rotationsachse zuläßt und die Borsten relativ zueinander antreibt, ist vorliegend vorgesehen, daß der gesamte Bürstenkopf um seine Rotationsachse angetrieben wird und die Borsten bzw. die Borstenträgersegmente relativ zueinander eine Ausgleichbewegung machen können.

In Weiterbildung der Erfindung sind die Vorspannmittel und/oder die beweglichen Bor stenträgersegmente derart ausgebildet, daß die beweglichen Borstenträgersegmente vom Antrieb der Zahnbürste zu einer resonanten Schwingbewegung anregbar sind. Insbesondere sind die Vorspannmittel und die beweglichen Borstenträgersegmente derart auf die Antriebsfrequenz des Zahnbürstenantriebs abgestimmt, daß eine Resonanzschwingung entlang der zusätzlichen Bewegungsachse der Borstenträgersegmente entstehen kann. Hierdurch wird eine doppelte Putzbewegung der freien Borstenenden erreicht, nämlich zum einen die rotatorische Antriebsbewegung um die Rotationsachse und zum anderen die hierzu senkrechte Bewegung in Folge der Eigenresonanz.

Die Bewegbarkeit der Borstenträgersegmente zueinander kann auf verschiedene Art und Weise bewerkstelligt werden. Gemäß einer bevorzugten Ausführung der Erfindung weist der Borstenträger zwei diametral gegenüberliegende Schwenksegmente auf, die relativ zueinander um eine gemeinsame Schwenkachse schwenkbar gelagert sind. Die beiden Schwenksegmente sind über ein entsprechendes Segment mit der an den Zahnbürstenantrieb ankoppelbaren Borstenträgerbasis verbunden und relativ zu dieser schwenkbar. Die gemeinsame Schwenkachse ist insbesondere senkrecht zur Rotationsachse des Bürstenträgers angeordnet. Hierdurch erhalten die mittig über der zentralen Schwenkachse angeordneten Borsten beim Andrücken gegen die Zähne im Vergleich zu den äußeren Borsten, die von der Schwenkachse beabstandet am Borstenträger festgelegt sind, eine relativ hohe Steifigkeit beim Andrücken gegen die Zähne. Die äußeren Borsten, die von der Schwenkachse beabstandet am Borstenträger befestigt sind, geben beim Andruck an die Zähne durch Wegschwenken des Borstenträgersegments nach. Die zentrale, gemeinsame Schwenkachse erlaubt eine kompakte Anordnung mit geringem Trägheitsmoment und einen einfachen Aufbau des Bürstenkopfs.

Gemäß einer weiteren bevorzugten Ausführung der Erfindung kann der Borstenträger zwei diametral gegenüberliegende Schwenksegmente aufweisen, die um zwei voneinander beabstandete, insbesondere parallele Schwenkachsen relativ zueinander schwenkbar gelagert sind. Jedes Schwenksegment hat bei dieser Ausführung seine eigene Schwenkachse, um die es relativ zur Borstenträgerbasis kippen kann. Die Schwenkachsen sind vorzugsweise derart positioniert, daß bei Druck auf zentrale Borsten das Borstenfeld zusammenklappt und den Zahn v-förmig umschließt. Hierdurch können die weiter außen angeordneten Borsten in die Interdentalräume eindringen. Wird der Andruck weiter erhöht, weichen die inneren Borsten nach außen aus und das Borstenfeld klappt auf, wodurch der Widerstand der Borsten gegen den Zahn sinkt und die äußeren Borsten noch tiefer in die Interdentalräume eindringen können. Bei Andruck auf einen Schneidezahn erfolgt die Krafteinleitung hauptsächlich über die äußeren Borsten und das Borstenfeld wird gegen die Vorspannung plangedrückt. Die beiden Schwenkachsen liegen jeweils unter den auf dem Borstenträgersegment befestigten Borsten, insbesondere kann der Abstand der Schwenkachsen von der Rotationsachse etwa einhalbmal bis einmal dem Radius des Borstenträgers entsprechen.

Der Borstenträger kann ausschließlich beweglich gelagerte Borstenträgersegmente aufweisen, so daß alle Borstenträgersegmente relativ zur Rotationsachse des Borstenträgers beweglich sind. Nach einer anderen vorteilhaften Ausführung der Erfindung kann der Borstenträger zumindest ein starres Borstenträgersegment aufweisen, das neben der Rotationsachse frei von weiteren Bewegungsachsen und starr mit der Borstenträgerbasis verbunden ist. Dieses starre Borstenträgersegment ist also lediglich um die Rotationsachse drehbar. Insbesondere können zwei diametral gegenüberliegende Borstenträgersegmente starr ausgebildet sein, die zwei gegenüberliegende Schwenksegmente zwischen sich einfassen. Auf den beweglichen Schwenksegmenten können Borstenbüschel befestigt sein, die gegenüber den auf den starren Segmenten befestigten Borsten vorstehen. Durch die schwenkbare Lagerung können sie zurückgedrückt werden.

In Weiterbildung der Erfindung sind die Borsten, die an den beweglichen Borstenträgersegmenten befestigt sind, in der vorgespannten Grundstellung dieser Borstenträgersegmente aufeinander zu geneigt. Beim Zurückschwenken der Borstenträgersegmente können die Borsten vorzugsweise in eine zur Rotationsachse des Bürstenkopfes parallele Ausrichtung gebracht werden.

Die Borsten können in Weiterbildung der Erfindung derart angeordnet sein, daß sie mit ihren Längsachsen zur Rotationsachse bzw. zu einer die Rotationsachse enthaltenden Mittelebene des Bürstenkopfs einen Winkel von weniger als 30 Grad, vorzugsweise weniger als 15 Grad einschließen. Insbesondere können die auf den beweglichen Borstenträgersegmenten angeordneten Borsten in der vorgespannten Grundstellung des jeweiligen Borstenträgersegments zur Rotationsachse bzw. zur genannten Mittelebene in einem spitzen Winkel von vorzugsweise weniger als 15 Grad, insbesondere etwa zwischen 4 und 8 Grad geneigt sein.

Der Schwenkbereich der Borstenträgersegmente kann begrenzt ausgebildet sein. Gemäß einer vorteilhaften Ausführung der Erfindung ist es ausreichend, daß die Borsten der beweglichen Borstenträgersegmente in einem Bereich von weniger als 15 Grad schwenkbar sind.

In Weiterbildung der Erfindung können in einem radial außenliegenden Bereich des Bürstenkopfs angeordnete Borsten eine höhere Borstensteifigkeit aufweisen als Borsten, die in einem radial innenliegenden Bereich des Bürstenkopfs befestigt sind. Dies kann durch verschiedene Parameter erreicht werden. Insbesondere können die außenliegenden Borsten im Vergleich zu den innenliegenden Borsten einen entsprechend anderen Biegemodul und/oder einen anderen Durchmesser besitzen. Die unterschiedliche Borstensteifigkeit kann auch durch eine geeignete Materialauswahl, durch eine andere Feuchteaufnahme und/oder durch eine geeignete Auswahl der Struktur der Borsten erreicht werden. So können zum Beispiel außenliegende Borsten gerade ausgebildet sein, während die inneren gekrümmt sind. Es können auch Bifilamente vorgesehen sein.

Vorzugsweise können radial außenliegende Borsten mit ihren freien Enden die radial inneren Borsten in Richtung der Rotationsachse überragen. Dies kann durch eine entsprechende Kontur des Borstenträgers erreicht werden. Vorzugsweise jedoch kann dies durch eine größere Länge der außenliegenden Borsten erreicht werden. Die von den freien Enden der Borsten definierte Arbeitsfläche kann nach außen hin gestuft ausgebildet sein. Insgesamt ist die Arbeitsfläche in der vorgespannten Grundstellung der Borstenträger segmente konkav ausgebildet.

Um die Auswechselbarkeit des Bürstenkopfs zu vereinfachen, ist in vorteilhafter Weise an den Borstenträger ein zentrales schaftartiges Kupplungsstück zum Ankuppeln an den Antrieb der Zahnbürste vorgesehen. Das Kupplungsstück kann insbesondere einstückig an die Borstenträgerbasis angeformt sein. Es ist vorzugsweise als Schnappverbindung ausgebildet.

Besonders vorteilhaft wirkt der vorgeschlagene Bürstenkopf in Verbindung mit einer rotierend oszillierend und zusätzlich entlang der Rotationsachse translatorisch oszillierenden Antriebsbewegung. Die Borsten werden dabei zum einen um die Rotationsachse hin- und hergedreht und zum anderen in einer Stocherbewegung auf die Zähne zu und von diesen weg bewegt. Hierdurch wird eine besonders effektive und umfassende Zahnreinigung bewirkt und auch tiefere Interdentalräume erreicht. Durch die bewegliche Anordnung der Borstenträgersegmente werden bei nicht angepaßter Andruckkraft Verletzungen des Zahnfleischs verhindert.

Die Erfindung wird nachfolgend anhand bevorzugter Ausführungsbeispiele und zugehöriger Zeichnungen näher erläutert. In den Zeichnungen zeigen:
- Figur 1: eine perspektivische Ansicht eines Bürstenkopfes mit um eine gemeinsame Schwenkachse angelenkten Borstenträgersegmenten nach einer bevorzugten Ausführung der Erfindung,
- Figur 2: eine Draufsicht auf die von den freien Enden der Borsten definierten Arbeitsfläche des Bürstenkopfs aus Figur 1,
- Figur 3: einen Schnitt durch den Bürstenkopf der Figuren 1 und 2 entlang der Linie A-A in Figur 2,
- Figur 4: einen Schnitt durch den Bürstenkopf der vorhergehenden Figuren entlang der Linie B-B in Figur 2,
- Figur 5: eine perspektivische Ansicht eines Bürstenkopfs mit zwei um separate Schwenkachsen schwenkbaren Borstenträgersegmenten gemäß einer weiteren bevorzugten Ausführung der Erfindung,
- Figur 6: einen Schnitt durch den Bürstenkopf aus Figur 5 senkrecht zu den Schwenkachsen der Borstenträgersegmente, wobei die Borstenträgersegmente in ihrer vorgespannten Grundstellung mit aufeinander zu geneigten Borsten gezeigt sind,
- Figur 7: einen Schnitt durch den Bürstenkopf aus Figur 5 quer zu den Schwenkachsen, wobei die Borstenträgersegmente in einer aufgeklappten Stellung mit zueinander parallel ausgerichteten Borsten gezeigt sind, und
- Figur 8: eine perspektivische Ansicht eines Bürstenkopfs mit zwei starren Borstenträgersegmenten und zwei schwenkbar gelagerten Borstenträgersegmenten gemäß einer weiteren bevorzugten Ausführung der Erfindung.

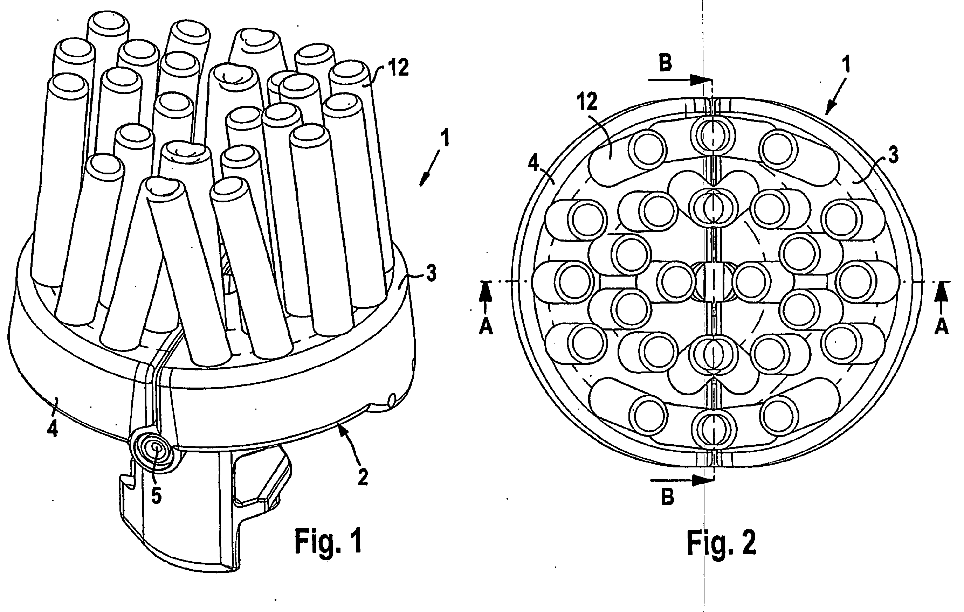

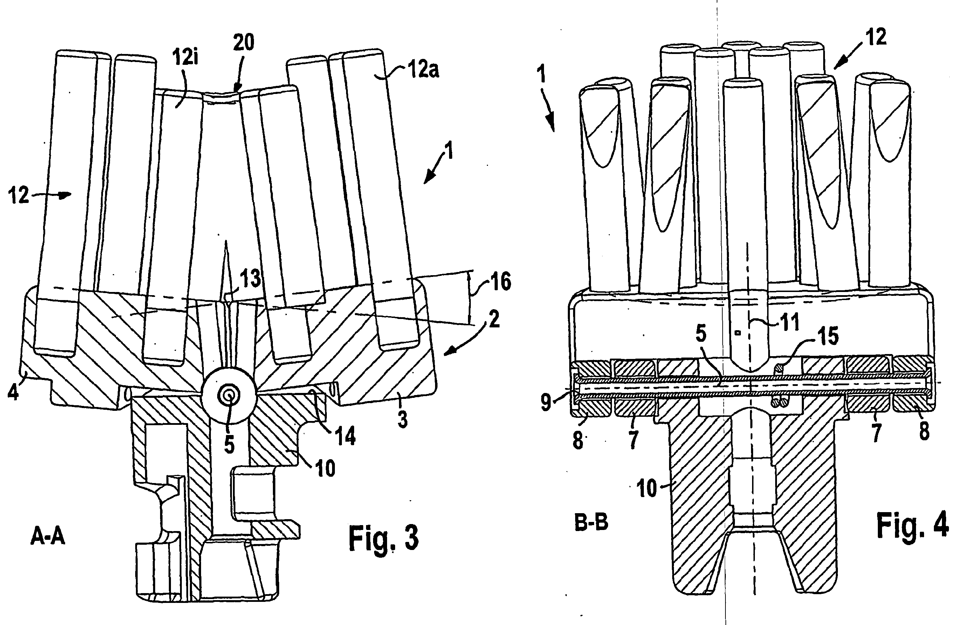

Der Bürstenkopf 1 gemäß den Figuren 1 bis 4 besitzt einen im wesentlichen scheibenförmigen Borstenträger 2, der in zwei etwa halbmondförmige Borstenträgersegmente 3 und 4 unterteilt ist. Die Borstenträgersegmente 3 und 4 sind voneinander separat ausgebildet. Wie insbesondere die Figuren 3 und 4 zeigen, sind die Borstenträgersegmente 3 und 4 entlang einer gemeinsamen Schwenkachse 5 miteinander gelenkig verbunden. Die beiden Borstenträgersegmente 3 und 4 sitzen hierzu mit entsprechend geformten und miteinander fluchtenden Lagerabschnitten 7 und 8 auf einem gemeinsamen Achsschaft 9, der wiederum an einer Borstenträgerbasis 10 gelagert ist (vgl. Figur 4).

Die Borstenträgerbasis 10 ist als schaftartiges Kupplungsstück ausgebildet, das an einen nicht näher dargestellten Rotationsantrieb einer elektrischen Zahnbürste ankuppelbar, insbesondere auf diesen aufsteckbar ist. Die Borstenträgerbasis 10 definiert die Rotationsachse 11 des Bürstenkopfs, die senkrecht zur Schwenkachse 5 der Borstenträgersegmente 3 und 4 sowie im wesentlichen senkrecht zur Stirnseite des Borstenträgers 2 steht, an der die Borsten 12 in Form von Büscheln verankert sind.

Die unter dem Borstenträger 2 liegende Schwenkachse 5 erlaubt nur eine begrenzte Schwenkbewegung der Borstenträgersegmente 3 und 4. Wie Figur 3 zeigt, ist die Schwenkbewegung der Borstenträgersegmente 3 und 4 in beide Richtungen durch Anschläge 13 und 14 begrenzt. Der Anschlag 13 wird von den einander gegenüberliegenden Stirnflächen der Borstenträgersegmente 3 und 4 selbst gebildet. Der Anschlag 14, der das Auseinanderschwenken der beiden Borstenträgersegmente 3 und 4 begrenzt, wird von der den Borstenträgersegmenten 3 und 4 gegenüberliegenden Stirnseite der Borstenträgerbasis 10 gebildet, an der die Borstenträgersegmente 3 und 4 mit ihrer Unterseite anstehen, wenn sie ihre aufgeklappte Endstellung erreicht haben, in der die beiden Borstenträgersegmente 3 und 4 eine ebene, flache Borstenscheibe bilden. Der Schwenkwinkel 16, um den die beiden Borstenträgersegmente 3 und 4 maximal zueinander verschwenkt werden können, liegt zwischen 5 und 25, vorzugsweise zwischen 10 und 15 Grad. Gemäß einer vorteilhaften Ausführung der Erfindung kann jedes der Borstenträgersegmente 3 und 4 um etwa 4 bis 8 Grad relativ zu der Borstenträgerbasis 10 geschwenkt werden.

Den beiden Borstenträgersegmenten 3 und 4 ist eine Federeinrichtung 15 zugeordnet, die als Vorspanneinrichtung wirkt und die beiden Borstenträgersegmente 3 und 4 in eine aufeinander zu geneigte Ausgangsstellung drückt. Die vorgespannte Ausgangsstellung ist in Figur 3 dargestellt. In der gezeigten Ausgangsstellung sind die Oberflächen der Borstenträgersegmente 3 und 4, an denen die Borsten 12 verankert sind, in einem Winkel 16 von 12 Grad zueinander geneigt, das heißt die Oberflächen schließen einen Winkel von 168 Grad ein und die Borsten 12 sind in einem Winkel von 12 Grad zueinander geneigt.

Die Federeinrichtung 15 kann verschiedenartig ausgebildet sein und sich zum Beispiel zwischen der Unterseite der Borstenträgersegmente 3 und 4 und der dieser zugewandten Stirnseite der Borstenträgerbasis 10 abstützen. In der gezeigten Ausführung ist als Federeinrichtung 15 eine um die Schwenkachse 5 bzw. den Achsschaft 9 gewickelte Schenkelfeder vorgesehen (vgl. Figur 4).

Vorzugsweise ist die Federeinrichtung 15 in ihrer Federcharakteristik so eingestellt, daß die Borstenträgersegmente 3 und 4 durch den rotatorischen Bürstenantrieb um die Rotationsachse 11 in Eigenresonanz übergehen bzw. zumindest zu einer halbwegs resonanten Schwenkbewegung angeregt werden.

Die Borsten 12 können an dem Borstenträger 2 in verschiedener Konfiguration und Ausrichtung angeordnet sein. Eine vorteilhafte Ausführung besteht darin, daß die Borsten 12 im wesentlichen senkrecht aus der flachen Oberfläche der Borstenträgersegmente 3 und 4 heraustreten, so daß sie in der vorgespannten Ausgangsstellung der Borstenträgersegmente gemäß Figur 3 aufeinander zu geneigt sind und bei aufgeklappter Stellung der Borstenträgersegmente 3 und 4, in der diese eine flache Scheibe bilden, parallel zur Rotationsachse 11 angeordnet sind. Wie Figur 2 zeigt, können innenliegende Borstenbüschel zusätzlich nach innen aufeinander zu geneigt sein.

Vorzugsweise besitzen die radial weiter außen liegenden Borsten 15a eine höhere Borstensteifigkeit als radial weiter innen liegende Borsten 15i (vgl Figur 3). Dies kann zum Beispiel durch Auswahl der Parameter Biegemodul, Durchmesser, Material und/oder Borstenstruktur gesteuert werden.

In vorteilhafter Weise sind darüber hinaus die außenliegenden Borsten 15a länger als die innenliegenden Borsten 15i, das heißt die im Außenbereich befestigten Borsten 15a überragen mit ihren freien Enden in Richtung der Rotationsachse 11 die Borsten 15i im Innenfeld der Bürste. Hierdurch erhält die von den freien Enden definierte Arbeitsfläche eine abgestufte, konkave Ausbildung, durch die sich die freien Enden der Borsten an die gewölbten Zahnoberflächen anschmiegen und die außenliegenden härteren Borsten in Zahnzwischenräume zur Interdentalreinigung eindringen können.

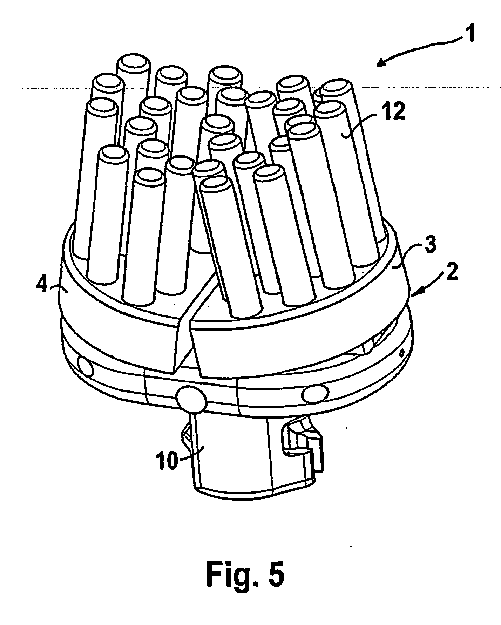

Eine zweite bevorzugte Ausführungsform der Erfindung ist in den Figuren 5 bis 7 dargestellt. Soweit die Bauteile des Bürstenkopfs denen der vorgehenden Ausführungsform entsprechen, sind diese mit denselben Bezugsziffern gekennzeichnet.

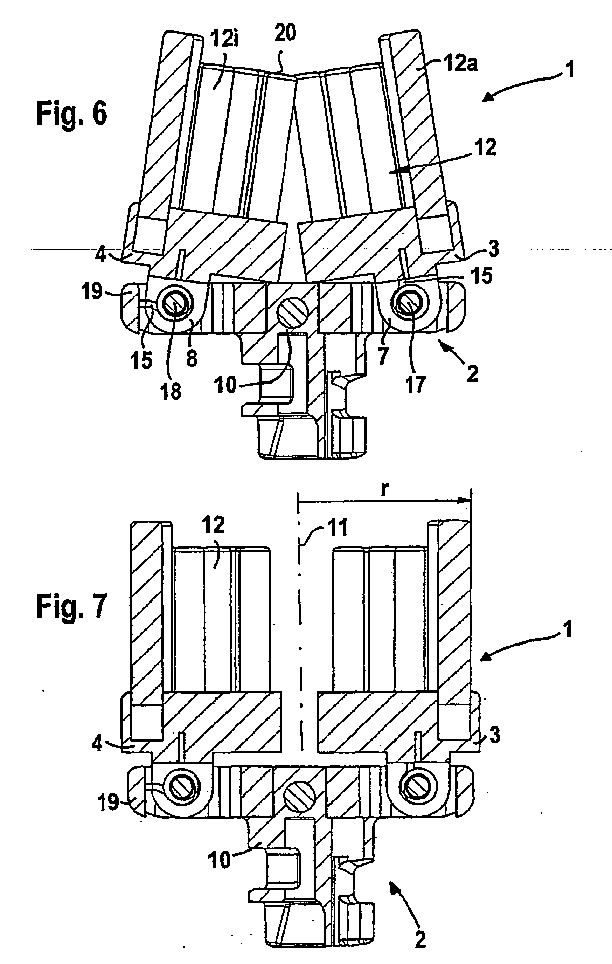

Der Bürstenkopf 10 besitzt wie bei der zuvor beschriebenen Ausführung einen Borstenträger 2, der in zwei Borstenträgersegmente 3 und 4 unterteilt ist, die zueinander schwenkbar angeordnet sind. Im Gegensatz zu der zuvor beschriebenen Ausführung jedoch sind die beiden Borstenträgersegmente 3 und 4 nicht um eine gemeinsame Schwenkachse, sondern um zwei separate Schwenkachsen 17 und 18 schwenkbar, die voneinander beabstandet und parallel angeordnet sind. Wie Figur 6 zeigt, liegen die Schwenkachsen 17 und 18 in einer zur Rotationsachse 11 des Bürstenkopfs 1 senkrechten Ebene. Der Abstand der Schwenkachsen 17 und 18 jeweils von der Rotationsachse 11 beträgt etwa drei Viertel des Radius r des am Borstenträger 2 befestigten Borstenfeldes (vgl. Figur 7).

Der Borstenträger 2 besitzt wie bei der zuvor beschriebenen Ausführung eine unter den Borstenträgersegmenten 3 und 4 liegende Borstenträgerbasis 10, die zur Ausbildung der separaten Schwenkachsen 17 und 18 sich stirnseitig zu den Borstenträgersegmenten 3 und 4 hin zu einer Trägerscheibe 19 erweitert. Die Borstenträgersegmente 3 und 4 sitzen mit Lagerabschnitten 7 und 8 auf einem Achsschaft 9, der die Schwenkachse 5 definiert und in einer entsprechenden Aussparung in der Trägerscheibe 19 der Borstenträgerbasis 10 angeordnet ist.

Die beiden Borstenträgersegmente 3 und 4 sind mittels zwei Federeinrichtungen 15, die als Vorspannmittel wirken, in eine aufeinander zu geneigte Ausgangsstellung vorgespannt, in der die Borsten 12 zu einer die Rotationsachse 11 enthaltenden Mittelebene hin geneigt sind (vgl. Figur 6).

Die Schwenkbarkeit der Borstenträgersegmente 3 und 4 ist begrenzt. In der gezeigten Ausführungsform bildet die den Borstenträgersegmenten 3 und 4 zugewandte Stirnseite der Trägerscheibe 19 Anschläge, an denen die Borstenträgersegmente 3 und 4 mit ihrer Unterseite in den jeweils extremen Schwenkstellungen anstehen.

Durch die gezeigte Anordnung zweier separater Schwenkachsen läßt sich eine andere Kinematik erreichen. Die beiden Schwenkachsen 17 und 18 sind derart zueinander positioniert, daß durch Krafteinleitung auf die in der Mitte liegenden Borsten 12i bei leichtem Andruck gegen einen Molaren das Borstenfeld zusammenklappt, das heißt die Borstenträgersegmente 3 und 4 die in Figur 6 gezeigte Stellung einnehmen und die Borsten 12 den Zahn v-förmig umschließen. Hierdurch können die äußeren Borsten 12a in die Interdentalräume eindringen. Wird der Andruck weiter erhöht, weichen die Borsten 12 nach außen aus und das Borstenfeld klappt auf, wodurch der Widerstand der Borsten gegen den Zahn sinkt und die äußeren Borsten 12a noch tiefer in die Interdentalräume eindringen können. Bei Andruck auf einen Schneidezahn erfolgt die Krafteinleitung hauptsächlich über die äußeren Borsten 12a, und das Borstenfeld wird gegen die Federvorspannung plangedrückt. Die Borsten nehmen dann die in Figur 7 gezeigte Konfiguration ein.

Wie bei der zuvor beschriebenen Ausführung bilden die freien Enden der Borsten 12 eine stufenförmige, insgesamt konkave Arbeitsfläche 20. Die äußeren Borsten 12a überragen mit ihren freien Enden in Richtung der Rotationsachse 11 die weiter innen angeordneten Borsten 12i.

In der bereits beschriebenen Art und Weise besitzen die äußeren Borsten 12a vorzugsweise eine höhere Borstensteifigkeit als die Borsten 12i im Innenfeld der Bürste.

Der maximale Schwenkwinkel bei der Ausführung gemäß den Figuren 5 bis 7 ist etwas größer als bei der zuvor beschriebenen Ausführung. In der maximal zusammengeschwenkten Stellung, wie sie in Figur 6 gezeigt ist, schließen die Borsten 12 zur die Rotationsachse 11 enthaltenden Mittelebene einen Winkel zwischen 10 und 25 Grad ein, vorzugsweise beträgt der Winkel etwa 16 Grad. Wie Figur 7 zeigt, können die Borstenträgersegmente 3 und 4 so weit voneinander weg geschwenkt werden, daß die Borsten 12 parallel zur Rotationsachse 11 verlaufen. Gegebenenfalls können die Borstenträgersegmente noch weiter auseinandergeschwenkt werden, so daß die Borsten 12 v-förmig auseinanderlaufen.

In vorteilhafter Weise sind auch bei der Ausführung gemäß den Figuren 5 bis 7 die Federeinrichtungen 15 in ihrer Federcharakteristik so eingestellt, daß die jeweiligen Borstenträgersegmente 3 und 4 durch den rotatorisch oszillierenden Bürstenantrieb in Eigenresonanz übergehen bzw. zu einer zumindest halbwegs resonanten Schwenkbewegung angeregt werden.

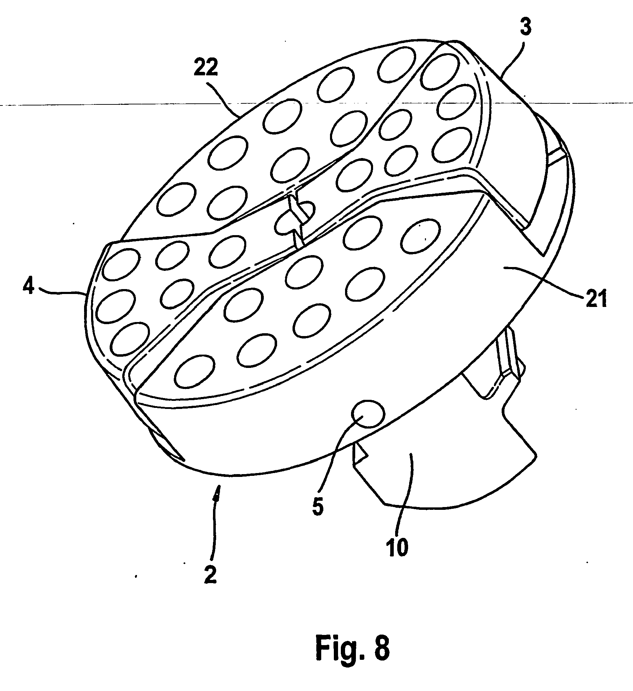

Eine weitere Ausführung der Erfindung ist in der Figur 8 dargestellt. Soweit die Komponenten des darin gezeigten Bürstenkopfes mit denen der zuvor beschriebenen Ausführungen übereinstimmen, sind sie mit denselben Bezugsziffern gekennzeichnet.

Wie bei der Ausführung gemäß den Figuren 1 bis 4 sind zwei diametral gegenüberliegende Borstenträgersegmente 3 und 4 um eine gemeinsame Schwenkachse schwenkbar gelagert, die senkrecht zur Rotationsachse des Bürstenkopfs steht. Die beiden Borstenträgersegmente 3 und 4 können jedoch auch wie bei der Ausführung gemäß den Figuren 5 bis 7 um zwei separate Schwenkachsen schwenkbar an der Borstenträgerbasis 10 angelenkt sein.

Im Gegensatz zu den zuvor beschriebenen Ausführungen besteht der Borstenträger 2 nicht ausschließlich aus den beweglichen Borstenträgersegmenten 3 und 4. Zusätzlich zu letzteren besitzt der Bürstenkopf 1 zwei starre Borstenträgersegmente 21 und 22, zwischen denen die beweglichen Borstenträgersegmente 3 und 4 angeordnet sind. Die starren Borstenträgersegmente 21 und 22 bilden zusammen mit den beweglichen Borstenträgersegmenten 3 und 4 den im wesentlichen scheibenförmigen Borstenträger 2.

## Patentansprüche

1. Bürstenkopf für eine Zahnbürste, die einen Antrieb zur insbesondere rotatorischen Bewegung des Bürstenkopfs besitzt, mit einer Mehrzahl von Borsten (12) und einem Borstenträger (2), an dem die Borsten (12) befestigt sind, wobei der Borstenträger (2) im wesentlichen teller- oder scheibenförmig ausgebildet ist, eine Rotations- oder Bewegungsachse (11), um die er antreibbar ist, aufweist, wobei der Borstenträger (2) in mehrere Borstenträgersegmente (3, 4, 21, 22) unterteilt ist, die relativ zueinander beweglich angeordnet sind, wobei der Borstenträger (2) Verbindungsmittel zur Ankopplung an den Antrieb der Zahnbürste besitzt, wobei mindestens ein Borstenträgersegment (3, 4, 21, 22) mit einem Lagerabschnitt (7, 8) auf einem Achsschaft (9) sitzt, der an einer Borstenträgerbasis (10) gelagert ist, und wobei die Borstenträgerbasis (10) an den Antrieb der Zahnbürste ankuppelbar ist.

2. Bürstenkopf nach dem vorhergehenden Anspruch, wobei die Borstenträgersegmente (3, 4) relativ zueinander um zumindest eine insbesondere quer zur Bewegungs- oder Rotationsachse (11) verlaufende Schwenkachse (5, 17, 18) schwenkbar sind.

3. Bürstenkopf nach einem der vorhergehenden Ansprüche, wobei Vorspannmittel (15), insbesondere eine Federeinrichtung, zur Vorspannung der Borstenträgersegmente (3, 4) relativ zueinander in eine Grundstellung vorgesehen sind.

4. Bürstenkopf nach einem der vorhergehenden Ansprüche, wobei die beweglichen Borstenträgersegmente (3, 4) frei von Antriebsmitteln relativ zueinander bewegbar oder schwenkbar ausgebildet sind.

5. Bürstenkopf nach einem der vorhergehenden Ansprüche, wobei die Vorspannmittel und/oder die beweglichen Borstenträgersegmente (3, 4) derart ausgebildet sind, daß die beweglichen Borstenträgersegmente vom Antrieb der Zahnbürste zu einer resonanten Schwenkbewegung anregbar sind.

6. Bürstenkopf nach einem der vorhergehenden Ansprüche, wobei der Borstenträger (2) zwei diametral gegenüberliegende Schwenksegmente (3, 4) aufweist, die relativ zueinander um eine gemeinsame Schwenkachse (5) schwenkbar gelagert sind.

7. Bürstenkopf nach einem der vorhergehenden Ansprüche, wobei der Borstenträger (2) zwei diametral gegenüberliegende Schwenksegmente (3, 4) aufweist, die um zwei voneinander beabstandete vorzugsweise parallele Schwenkachsen (17, 18) relativ zueinander schwenkbar gelagert sind.

8. Bürstenkopf nach einem der vorhergehenden Ansprüche, wobei der Borstenträger (2) zumindest ein starr gelagertes Borstenträgersegment (21, 22) aufweist.

9. Bürstenkopf nach einem der vorhergehenden Ansprüche, wobei die beweglichen Borstenträgersegmente (3, 4) in eine aufeinander zu geneigte Stellung vorgespannt sind.

10. Bürstenkopf nach einem der vorhergehenden Ansprüche, wobei die Borsten (12) mit ihren Längsachsen zur Rotationsachse (11) bzw. zu einer die Rotationsachse enthaltenden Mittelebene einen Winkel von weniger als 30 Grad, vorzugsweise weniger als 15 Grad einschließen.

11. Bürstenkopf nach einem der vorhergehenden Ansprüche, wobei die auf den beweglichen Borstenträgersegmenten (3, 4) angeordneten Borsten (12) in einer vorgespannten Grundstellung des jeweiligen Borstenträgersegments zur Rotationsachse (11) bzw. zu einer die Rotationsachse enthaltenden Mittelebene in einem spitzen Winkel, vorzugsweise von weniger als 15 Grad, insbesondere etwa zwischen 4 Grad und 8 Grad geneigt sind.

12. Bürstenkopf nach einem der vorhergehenden Ansprüche, wobei die Borsten (12) der beweglichen Borstenträgersegmente (3, 4) in einem Bereich von weniger als 15 Grad schwenkbar sind.

13. Bürstenkopf nach einem der vorhergehenden Ansprüche, wobei Borsten (12a) in einem radial außenliegenden Bereich eine höhere Borstensteifigkeit als Borsten (12i) in einem radial innenliegenden Bereich aufweisen.

14. Bürstenkopf nach einem der vorhergehenden Ansprüche, wobei Borsten (12a) in einem radial außenliegenden Bereich mit ihren freien Enden in Richtung der Rotationsachse (11) Borsten (12i) in einem radial inneren Bereich überragen.

15. Bürstenkopf nach einem der vorhergehenden Ansprüche, wobei die Borsten (12) eine im wesentlichen flache und/oder konkave Arbeitsfläche (20) bilden.

16. Bürstenkopf nach einem der vorhergehenden Ansprüche, wobei ein zentrales, schaftartiges Kupplungsstück (10) zum Ankuppeln des Borstenträgers (2) an den Antrieb vorgesehen, insbesondere einstückig an eine Borstenträgerbasis (10) angeformt, vorzugsweise als Schnappverbindung ausgebildet ist.

17. Zahnbürste mit einem motorischen Antrieb und einem Bürstenkopf (1) nach einem der vorhergehenden Ansprüche.

18. Zahnbürste nach dem vorhergehenden Anspruch, wobei der Antrieb rotatorisch und/oder translatorisch oszillierend ausgebildet ist.

## Claims

1. A brush head for a toothbrush that features a drive, in particular, for moving the brush head in a rotational fashion, wherein the brush head features a multitude of bristles (12) and a bristle carrier (2), on which the bristles (12) are fixed, wherein the bristle carrier (2) is essentially realized in a plate-shaped or disk-shaped fashion and has an axis of rotation or movement (11), about which the bristle carrier can be driven, wherein the bristle carrier (2) is divided into several bristle carrier segments (3, 4, 21, 22) that can be moved relative to one another, wherein the bristle carrier features connecting means for being coupled to the drive of the toothbrush, wherein at least one bristle carrier segment (3, 4, 21, 22) is seated on an axle shaft (9) supported on the bristle carrier base (10) with a bearings section (7, 8), and wherein the bristle carrier base (10) can be coupled to the drive of the toothbrush.

2. The brush head according to the preceding claim, wherein the bristle carrier segments (3, 4) can be pivoted relative to one another about at least one pivoting axis (5, 17, 18) that extends, in particular, transverse to the axis of rotation or movement (11).

3. The brush head according to one of the preceding claims, wherein a prestressing means (15), particularly a spring device, is provided for prestressing the bristle carrier segments (3, 4) relative to one another into a normal position.

4. The brush head according to one of the preceding claims, wherein the movable bristle carrier segments (3, 4) can be moved or pivoted relative to one another with the aid of a driving means.

5. The brush head according to one of the preceding claims, wherein the prestressing means and/or the movable bristle carrier segments (3, 4) are realized in such a way that the movable bristle carrier segments can be excited by the drive of the toothbrush such that they carry out a resonant pivoting movement.

6. The brush head according to one of the preceding claims, wherein the bristle carrier (2) features two diametrically opposite pivoting segments (3, 4) that can be pivoted relative to one another about a common pivoting axis (5).

7. The brush head according to one of the preceding claims, wherein the bristle carrier (2) features two diametrically opposite pivoting segments (3, 4) that can be pivoted relative to one another about two preferably parallel pivoting axes (17, 18) that are spaced apart from one another.

8. The brush head according to one of the preceding claims, wherein the bristle carrier (2) features at least one rigid bristle carrier segment (21, 22).

9. The brush head according to one of the preceding claims, wherein the movable bristle carrier segments (3, 4) are prestressed into a mutually inclined position.

10. The brush head according to one of the preceding claims, wherein the longitudinal axes of the bristles (12) form an angle of less than 30 degrees, preferably less than 15 degrees, with the axis of rotation (11) and a center plane containing the axis of rotation, respectively.

11. The brush head according to one of the preceding claims, wherein the bristles (12) arranged on the movable bristle carrier segments (3, 4) are inclined relative to the axis of rotation (11) and to a center plane containing the axis of rotation, respectively, by an acute angle of preferably less than 15 degrees, particularly between approximately 4 degrees and 8 degrees, in a prestressed normal position of the respective bristle carrier segment.

12. The brush head according to one of the preceding claims, wherein the bristles (12) of the movable bristle carrier segments (3, 4) can be pivoted within a range of less than 15 degrees.

13. The brush head according to one of the preceding claims, wherein bristles (12a) in a radially outer region have higher bristle rigidities than bristles (12i) in a radially inner region.

14. The brush head according to one of the preceding claims, wherein the free ends of bristles (12a) in a radially outer region protrude over bristles (12i) in a radially inner region in the direction of the axis of rotation (11).

15. The brush head according to one of the preceding claims, wherein the bristles (12) have an essentially flat and/or concave working surface (20).

16. The brush head according to one of the preceding claims, wherein a central shaft-like coupling element (10) is provided for coupling the bristle carrier (2) to the drive, and wherein the shaft-like coupling element, in particular, is integrally moulded onto a bristle carrier base (10), preferably realized in the form of a snap connection.

17. A toothbrush with a motor drive and a brush head (1) according to one of the preceding claims.

18. The toothbrush according to the preceding claim, wherein the drive is realized in a rotationally and/or translationally oscillating fashion.

## Revendications

1. Tête de brosse pour une brosse à dents comportant un entraînement en mouvement notamment rotatoire de la tête de brosse, avec une pluralité de poils (12) et un support de brosse (2) sur lequel les poils (12) sont fixés, le support de brosse (2) étant conçu sensiblement en forme de plateau ou de disque, présentant un axe de rotation ou de déplacement (11) autour duquel il peut être entraîné, le support de brosse (2) étant divisé en plusieurs segments de support de brosse (3, 4, 21, 22), qui sont disposés de façon mobile les uns envers les autres, le support de brosse (2) comprenant des moyens d'assemblage pour le couplage sur l'entraînement de la brosse à dent, au moins un segment de support de brosse (3, 4, 21, 22), s'appuyant par une section d'appui (7, 8) sur une tige d'axe (9) qui est logée sur une base de support de brosse (10) et la base de support de brosse (10) pouvant se coupler sur l'entraînement de la brosse à dents.

2. Tête de brosse selon la revendication précédente, les segments de support de brosse (3, 4) pouvant pivoter les uns par rapport aux autres autour d'au moins un axe de pivotement (5, 17, 18) qui s'étend notamment à la transversale de l'axe de rotation ou de déplacement (11).

3. Tête de brosse selon l'une quelconque des revendications précédentes, des moyens de précontrainte (15), notamment un système de ressort, étant prévus pour précontraindre les segments de support de brosse (3, 4) les uns par rapport aux autres dans une position initiale.

4. Tête de brosse selon l'une quelconque des revendications précédentes, les segments de support de brosse mobiles (3, 4) étant conçus pour être mobiles ou pivotants les uns par rapport aux autres sans moyen d'entraînement.

5. Tête de brosse selon l'une quelconque des revendications précédentes, les moyens de précontrainte et/ou les segments de support de brosse mobiles (3, 4) étant conçus de façon telle, que les segments de support de brosse mobiles puissent être excités par l'entraînement de la brosse à dent dans un mouvement de pivotement résonant.

6. Tête de brosse selon l'une quelconque des revendications précédentes, le support de brosse (2) comportant deux segments pivotants (3, 4) diamétralement opposés qui sont logés de façon pivotante l'un par rapport à l'autre autour d'un axe de pivotement (5) commun.

7. Tête de brosse selon l'une quelconque des revendications précédentes, le support de brosse (2) comportant deux segments pivotants (3, 4) diamétralement opposés, qui sont logés de façon pivotante l'un par rapport à l'autre, autour de deux axes de pivotement (17, 18) espacés, de préférence parallèles.

8. Tête de brosse selon l'une quelconque des revendications précédentes, le support de brosse (2) comportant au moins un segment de support de brosse (21, 22) à logement rigide.

9. Tête de brosse selon l'une quelconque des revendications précédentes, les segments de support de brosse (3, 4) mobiles étant précontraints dans une position inclinée l'un par rapport à l'autre.

10. Tête de brosse selon l'une quelconque des revendications précédentes, les poils (12) incluant avec leurs axes longitudinaux un angle inférieur à 30 degrés, de préférence inférieur à 15 degrés par rapport à l'axe de rotation (11) ou à un plan central contenant l'axe de rotation.

11. Tête de brosse selon l'une quelconque des revendications précédentes, dans une position initiale précontrainte du segment de support de brosse concerné, les poils (12) disposés sur les segments de support de brosse mobiles (3, 4) étant inclinés selon un angle aigu, de préférence de moins de 15 degrés, notamment compris entre 4 degrés et 8 degrés, par rapport à l'axe de rotation (11) ou à un plan central contenant l'axe de rotation.

12. Tête de brosse selon l'une quelconque des revendications précédentes, les poils (12) des segments de support de brosse mobiles (3, 4) pouvant pivoter dans une plage inférieure à 15 degrés.

13. Tête de brosse selon l'une quelconque des revendications précédentes, des poils (12a) dans une zone radiale extérieure faisant preuve d'une rigidité de poil supérieure à celle des poils (12i) dans une zone radiale intérieure.

14. Tête de brosse selon l'une quelconque des revendications précédentes, dans une zone radiale extérieure, des poils (12a) saillant avec leurs extrémités libres en direction de l'axe de rotation (11) par-dessus des poils (12i) dans une zone radiale extérieure.

15. Tête de brosse selon l'une quelconque des revendications précédentes, les poils (12) formant une surface de travail (20) sensiblement plate et/ou concave.

16. Tête de brosse selon l'une quelconque des revendications précédentes, une pièce d'accouplement centrale (10) du type tige pour le couplage du support de brosse (2) étant prévue sur l'entraînement, étant notamment façonnée en monobloc sur une base de support de brosse (10) et étant conçue de préférence sous forme d'une liaison par enclenchement.

17. Brosse à dent avec un entraînement motorisé et avec une tête de brosse (1) selon l'une quelconque des revendications précédentes.

18. Brosse à dent selon la revendication précédente, l'entraînement étant conçu pour osciller en rotation et/ou en translation.
